# EUROPEAN PATENT APPLICATION

(11) **EP 3 753 776 A1**
(43) Date of publication of application: **23.12.2020**
(21) Application number: 20180811.0
(22) Date of filing: 18.06.2020
(51) Int. Cl.: B60L 5/36, B60L 5/38

(54) **AUTOMATIC CONNECTION DEVICE**

(30) Priority: 18.06.2019 EP 19181046; 23.08.2019 NL 2023693
(71) Applicant: Prodrive Technologies B.V., 5692 EM Son (NL)
(72) Inventor: SNIJDERS, Tom Cornelis, Eindhoven (NL); MEESSEN, Koen Joseph, 5621GP Eindhoven (NL); VENEMA, Stefanus Hendrikus Albertus, 5623GA Eindhoven (NL)
(74) Representative: Pronovem

(57) **Abstract**

Automatic connection device for charging an electric vehicle comprising: an interface for providing electrical energy to a contra-interface, a planar motion stage comprising a first moving member, which first moving member is configured for moving the interface within a plane, a linear actuator configured for moving the interface in a direction essentially orthogonal to the plane, wherein the first moving member is configured to rotate the interface about a first axis essentially parallel to the direction, and wherein the linear actuator comprises a threaded member configured for converting a rotational motion to a linear motion for moving the interface in the direction, wherein the threaded member has an adjustable length configured for achieving the linear motion for moving the interface by adjusting the adjustable length between a compressed state for an idle state of the automatic connection device and an extended state for a charging state of the automatic connection device.

## Description

### Technical field

The present invention is related to an automatic connection device. The present invention is further related to a charging station comprising an automatic connection device and a use of an automatic connection device. A possible application of such automatic connection device is for charging an electric vehicle through conductive or wireless power transfer.

### Background art

Electric vehicle (EV) charging is typically accomplished by a wired connection between a charging station and the vehicle. To this end, the electric vehicle comprises a socket that can be mated with a plug of a charging cable that is removably attached to the charging station. Nowadays, several types of sockets are readily available. However, the disadvantage of all of these regular sockets is that they require manually mating the plug and socket.

Automated connection systems are known. EP0788212 discloses a system for connecting a groundside power supply to the underside of a vehicle. This system comprises a set of orthogonally arranged moving means for moving a connector in the x-y plane and a pantograph mechanism for moving the connector in the z direction. The main disadvantage of such a system is that the force and speed with which the connector is moved in the z direction is typically not constant without providing additional technical measures. Furthermore, such an automated connection device typically has a relatively large build height, requires a large amount of moving parts, is susceptible to malfunction due to pollutants and is difficult to shield from external influences such as debris or water.

### Summary of the invention

It is an object of the present invention to provide an automated connection system that solves one or preferably all of the disadvantages associated with embodiments according to the prior art.

According to a first aspect of the invention the object is achieved by providing an automated connection device according to the appended claims.

The automatic connection device (ACD) is used to realize a charging path to charge a battery powered vehicle. Preferably, embodiments according to the invention are suitable for charging electric vehicles with an alternating current of at least 10 ampere, for instance single phase power at 13 A, 16 A or 32 A respectively providing about 3 kW, 4 kW or 7 kW of power, or three phase power at 16 A, 32 A, 60 A per phase respectively providing about 11 kW, 22 kW or 43 kW. Alternatively, embodiments according to the invention are preferably suitable for charging electric vehicles with a direct current providing for instance between 50 kW and 350 kW (e.g. 120 kW). The ACD comprises an interface (e.g. a connector such as a plug) and a planar motion stage to realize a movement in a plane, preferably wherein the plane is substantially horizontal, e.g. an xy-movement of the interface with respect to a contra-interface (e.g. a connector such as a socket) of the battery powered vehicle. A linear actuator of the ACD is used to bring the interface and contra-interface together to allow charging. To this end an automatic connection device for charging an electric vehicle according to the present invention comprises an electrical interface, a planar motion stage comprising a first moving member, which first moving member is configured for moving the interface within a plane, a linear actuator configured for moving the interface in a direction essentially orthogonal to the plane, wherein the first moving member is configured to rotate the interface about a first axis essentially parallel to the direction and wherein the linear actuator comprises a threaded member for converting a rotational motion to a linear motion arranged for moving the electrical interface in a direction essentially orthogonal to the plane. Such an arrangement has the advantage that the force and speed with which the connector, such as the electrical interface, is moved (e.g. in the z direction) is independent of the relative distance between the electrical interface and the plane and thus may be kept constant. Furthermore, it allows a low build height with a limited amount of moving parts. Additionally, a rotatable first moving member and a linear actuator comprising a threaded member for converting a rotational motion to a linear motion is less susceptible to malfunction due to intrusion of solids and liquids and can easily be shielded from external influences such as debris or water.

Advantageously, a center of the interface is arranged at a first eccentric position from the first axis, because such an arrangement allows the translation of the interface within the plane when the first moving member is rotated. Preferably, the center is the geometrical center of the interface.

In a preferred embodiment, the planar motion stage comprises a second moving member configured to rotate the first moving member about a second axis essentially parallel to the direction. Two moving members, wherein the first moving member is nested into the second moving member, offer more freedom with respect to available/attainable locations and/or orientations of the interface. In situations where the first axis is located at a second eccentric position from the second axis, the first moving member will be translated and rotated when the second moving member rotates. Alternatively, in situations where the first axis and the second axis coincide, the first moving member will only be rotated when the second moving member rotates.

Preferably, a first distance between the first axis and the first eccentric position is the same or smaller (e.g. half) than a second distance between the first axis and the second axis. Such an arrangement typically allows the smallest dimensions of the automatic connection device for reaching a defined range of locations for the electrical interface. Alternatively, it may be beneficial that the first distance is at least the same or larger than the second distance, because this allows a circular area to be covered by the interface instead of an annular area. Embodiments wherein the first distance is essentially the same as the second distance offer the benefit of allowing the interface to be placed at any location within the circular area, while offering a compact arrangement. This circular area typically having its center essentially at the second axis and a radius of essentially an addition of the first distance and the second distance.

Advantageously, the first moving member has a rotation angle about the first axis of at least 180 degrees and wherein the second moving member has a rotation angle about the second axis of at least 360 degrees to allow a full circular or annular area to be reached by the interface.

It may be beneficial that the first moving member comprises a first limiter for limiting the rotation of the first moving member and that the second moving member comprises a second limiter for limiting the rotation of the second moving member to prevent undue twisting or turning, and thereby enhance lifetime a power conduit (e.g. cable) of the automatic connection device that is connected to the interface. Preferably, the first limiter limits the rotation to essentially 180 degrees and the second limiter limits the rotation to essentially 360 degrees to allow a full circular or annular area to be reached by the interface.

To simplify shielding the inner parts of the automatic connection device from external influences (e.g. water, debris) it is generally preferred that each moving member has a surface with an essentially circular circumference, preferably such surface is disc shaped.

The linear actuator of an automatic connection device according to the invention is configured for moving the interface in a direction essentially orthogonal to the plane. It may comprise a threaded member (e.g. spiral/helical spring/wire) configured for converting a rotational motion to a linear motion for moving the interface in the direction. Preferably, the rotational motion comprises a rotation about an axis of rotation being essentially parallel to the direction and preferably, the linear motion comprises a movement in the direction essentially orthogonal to the plane. In an advantageous embodiment, the threaded member has an adjustable length, unlike the spindle of a simple spindle drive, configured for achieving the linear motion for moving the interface by adjusting the adjustable length between a compressed state for an idle state of the automatic connection device and an extended state for a charging state of the automatic connection device. In particular such threaded member comprises a first endpoint and a second endpoint defining an axis of length adjustment having a directional component essentially along the direction orthogonal to the plane, wherein the adjustable length is adjusted by changing a distance between the first endpoint and the second endpoint along the axis of length adjustment. Preferably, such adjustment of the adjustable length may be achieved using a linear actuator further comprising an engagement means configured for engaging the threaded member and being rotated relative to the threaded member, in particular having an axis of rotation essentially parallel to the direction orthogonal to the plane (e.g. the axis of length adjustment). In a preferred embodiment the engagement means comprises an annular member, in particular an annular member defining a ring-like shape essentially parallel to the plane.

The threaded member may have various shapes and sizes. Preferably, it is hollow along the direction essentially orthogonal to the plane to accommodate a power conduit (e.g. cable). Advantageously, the threaded member has a compressed state and an extended state, wherein at least one part of the threaded member is expanded along the direction essentially orthogonal to the plane. This has the benefit that the threaded member can be compressed when the automatic charging device is not in use or idle to reduce the build height and extended for mating the interface with a counterpart located for instance under a vehicle. In the compressed state adjacent windings of the thread are closer to one another along the direction essentially orthogonal to the plane than the at least one part of the threaded member, preferably in the compressed state adjacent windings of the thread abut one another to achieve minimal dimensions in the compressed state.

Advantageously, the threaded member is resilient such that at least an extended part of the treaded member is configured for being resilient. Such a resilient threaded member has the benefit that it can be compressed when the automatic charging device is not in use to reduce the build height and extended for mating the interface with a counterpart located for instance under a vehicle. Furthermore, it may provide a means for maintaining a physical connection between the electrical interface (e.g. plug) and an electric contra-interface (e.g. socket) of the electric vehicle even when the electric vehicle moves, for instance due to loading or unloading of the vehicle (e.g. cargo, passengers). The resilience (e.g. offered by the extended part of threaded member to the interface) may be isotropic or anisotropic. Preferably, the extended part of the threaded member is configured for at least being resilient along the direction.

Advantageously, the threaded member is a hollow resilient member, such as a helical spring, wherein the windings form the thread of the threaded member. In situations where the threaded member has an essentially constant radius or an essentially constant winding diameter the threaded member be compressed such that adjacent windings abut one another, forming a tubular structure. Alternatively, the thread of the threaded member may be tapered to allow the thread to be compressed into an essentially planar spiral shape in the compressed state. Preferably, the diameter of the windings of such threaded member are chosen such that the inner surface of a winding is larger than the outer surface of an adjacent winding (e.g. the inner surface of a winding abuts the outer surface of an adjacent winding)..

For shielding the inner parts of the automatic connection device from external influences (e.g. water, debris) the threaded member (e.g. a helical spring) may be equipped with a skirt attached to its thread (e.g. windings of the helical spring) and arranged coaxially with a longitudinal axis of the threaded member. Preferably, such skirt extends along the direction essentially orthogonal to the plane and spans the area or gaps between adjacent windings of the part of the helical spring that is in an extended state.

In a first embodiment, the skirt is provided between the windings of the thread (e.g. helical spring) of the at least one part of the threaded member that is in an extended state. Such removably arranged skirt is preferably provided between adjacent windings of the thread, during extension of the threaded member, once two adjacent windings reach the displacement relative to one another along the direction essentially orthogonal to the plane corresponding to an extended state of the two adjacent windings. Additionally or alternatively, in such first embodiments each thread has a radius that is essentially the same. The skirt and optionally the thread of the treaded member may be made from a resilient material configured for allowing the extended part of the treaded member to form a resilient threaded member.

In a second embodiment, the skirt is connected to the windings of the thread (e.g. helical spring). Preferably, such thread is tapered and configured to allow the windings to form an essentially planar spiral shape in the compressed state essentially parallel to the plane, wherein the skirt extends essentially orthogonal to the essentially planar spiral shape.

The linear actuator may further comprise an engagement means, such as an annular member, for engaging the treaded member (e.g. the windings of a helical spring), which is configured for rotating relative to the threaded member and converting the rotational motion to the linear motion. For instance, the engagement means is configured for moving the windings of the thread of the treaded member towards or away from one another resulting in a compression or extension of the threaded member, respectively. To this end the annular member may comprise a radially extending (e.g. inward, outward) protrusion (e.g. a flange, a screw thread, an elongate extension) configured for engaging the threaded member and moving the thread. The benefit of using an annular member is that the void in or near the center of the annular member can be used to allow passage of a power conduit, such as a cable. Alternatively, any other engagement means, such as a protruding member configured for extending between at least two adjacent windings of the thread of the threaded member, may be used for rotating relative to the threaded member.

In a preferred embodiment of an automatic connection device according to the invention, the linear actuator is arranged between the first moving member and the interface, and is configured to move the interface relative to the first moving member along the direction. Such an arrangement allows a lower amount of mass to be displaced along the direction orthogonal to the plane compared to other embodiments according to the invention wherein the order in which features are connected is different. As a consequence, this reduces the actuation force requirements of the linear actuator. Additionally, it facilitates incorporating actuators (e.g. motors and gearings) in a part of the automatic connection device that is not displaced by the linear actuator along the direction. An additional advantage is that a smaller surface area of the displaced part comprising the interface reduces the requirements on the surface geometries surrounding the contra-interface.

To allow multiple vehicle models to be charged with an automatic connection device according to the present invention it is beneficial that the automatic connection device connects the interface with a contra-interface located at a well-defined location or surface of such vehicles, such as the underside of the vehicle, which is typically a relatively flat essentially horizontal surface. For mating such a contra-connector, the direction in which the interface is moved at least has a vertical directional component and preferably is essentially vertical.

It may be beneficial for the automatic connection device to further comprise a sensor for determining a misalignment within the plane between the interface and a contra-interface. Such misalignment information can be used for controlling the planar motion stage. It may also be used for informing the vehicle and controlling vehicle positioning.

Alternatively or additionally, the interface may comprise alignment features. For instance the interface may comprise a surface for mating a contra-interface having an alignment geometry for displacing the interface to allow mating connectors of the interface with connectors of a contra-interface. Examples of such geometries are conical, tapered, convex or concave. The benefit of an interface comprising such alignment features is that the (final) alignment does not have to be actively controlled.

The automatic connection device may also comprise a further sensor for determining a third distance between the interface and a contra-interface along the direction. The third distance can be used for controlling the linear actuator. It may for instance be used as a safety feature to ensure that the interface or contra-interface are exposed to unnecessary loads. It may also be used to accelerate the process of making an automated connection, by allowing a faster movement for a larger third distance and slowing the movement down for a shorter third distance.

According to a second aspect of the invention the object is achieved by providing a charging station comprising an automated connection device according to the appended claims. Beneficially such charging station further comprises means for positioning a vehicle at the charging position.

According to a third aspect of the inventions the object is achieved by a use of an automated connection device according to the appended claims.

### Brief description of the figures

Aspects of the invention will now be described in more detail with reference to the appended drawings, wherein same reference numerals illustrate same features and wherein:
Fig. 1 shows a cross-sectional view of an automated connection device according to an embodiment of the invention.
Fig. 2 shows schematic representations of the movement of planar motion stages in an automated connection device according to an embodiment of the invention.
Fig. 3A shows a sideview of an embodiment of a linear actuator for use in an automated connection device according to an embodiment of the invention in a compressed state.
Fig. 3B shows a sideview of an embodiment of a linear actuator for use in an automated connection device according to an embodiment of the invention in an extended state.
Fig. 4 shows schematic representations of various positions of planar motion stages in an automated connection device according to an embodiment of the invention.

### Description of embodiments

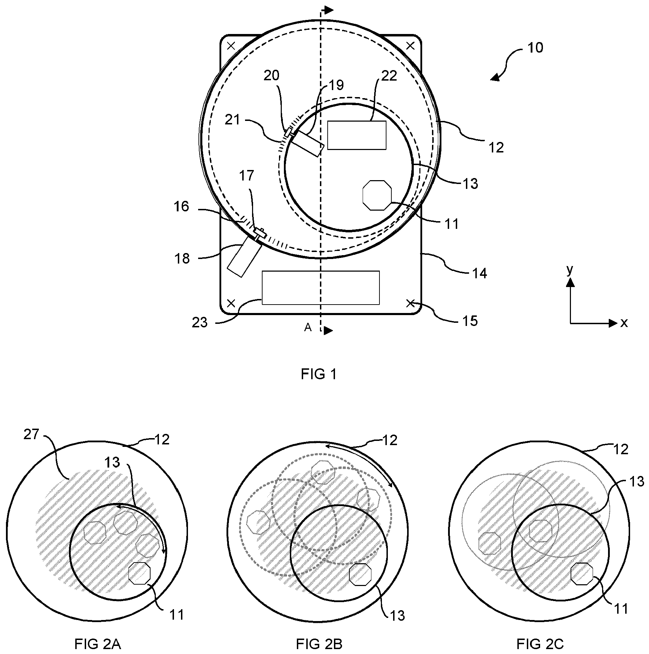

Referring to Fig. 1, the invention is related to an automated connection device 10. The device 10 comprises a first moving member 13 (e.g. an inner disk), a second moving member 12 (e.g. an outer disk), an electrical interface 11 (e.g. a connector) arranged on a base 14. The disks 12, 13 are arranged such that they can move the connector 11 in a plane, typically an essentially horizontal x,y plane underneath a vehicle. For mating, the required position of the connector 11 is exactly underneath a counterpart (e.g. contra-connector) provided on the vehicle, such that preferably only a z-movement in an essentially vertical direction by means of a linear actuator is needed to mate the two connector parts. After mating the vehicle can be charged, for instance through a conductive path or via induction.

Both disks 12, 13 in the device 10 can preferably rotate independently of one another and independent of the base 14. The two disks 12, 13 can be actuated by any usual means, such as electric motors 18, 19, which preferably drive the disks by a rack 16, 21 and pinion 17, 20 gear transmission.

For the outer disk 12 the gear rack 16 is connected to the outer disk 12 and the gear wheel 17 is connected to a motor 18 that is fixed to the base 14. This configuration eliminates the need of moving cables for controlling the outer disk rotation.

The inner disk 13 is actuated by the motor 19 that is fixed to the inner disk 13 and drives the gear wheel 20 that moves relative to the gear rack 21 attached to the outer disk 12. As a result the inner disk 13 rotates with respect to the outer disk 12. If the inner disk motor 19 is not powered the inner disk 13 does not move relative to the outer disk 12 and thus follows the rotation of the outer disk 12. By attaching the motor 19 for actuating the inner disk 13 to the inner disk 13, all cabling can be led from the base 14 to inner disk 13 directly, thus bypassing a connection to the moving outer disk 12.

The inner disk 13 can comprise a control unit 22, e.g. a printed circuit board for the control of the motor 19, e.g. through PWM. This local control and local PWM generation for the motor 19 eliminates the need of a long motor cable that might require shielding for EMC shielding purposes. Furthermore, other sensors and actuators close to the motor 19 might be needed, for example to open the connector cover, that may then also be controlled by the control unit 22.

The base 14 comprises a main control board 23 that may be configured to control the current through the motors 18, 19 and can comprise a sensor interface for connecting a sensor to measure the position of the disks 12, 13 relative to the base 14. Optionally, the main control board 23 integrates the electronics for the electrical vehicle supply equipment for charging the electric vehicle. The latter could eliminate the need for an external unit (e.g. wall box) housing such electronics. As a result, the system could be directly connected to the grid.

The base 14 can contain a system to detect the position of the vehicle. Sensors 15 (e.g. transmitters, receivers) for this position estimation system can be placed at the corners of the base 14 to enable accurate position estimation by maximizing the distance between the sensors. The position estimation system can be based on various signals such as ultrasound signals or magnetic signals. These systems typically determine the position based on a difference (e.g. in time or in signal strength) between the received signals sensed by different sensors 15, or transmitted by different sensors. Hence, a greater distance between individual receivers, transmitters, or both result in a better position estimation. Therefore, it may be advantageous to position the sensors at opposing edges or corners of the base 14. An additional position sensor 15 can be placed close to the connector 11 to reduce the effect of tolerances on the position device 10 itself.

Power transfer via the interface 11 can be realized by different means. An automatic connection device according to the invention may be used to realize inductive coupling between an interface 11 and a contra-interface with a very small airgap to enable a high efficiency power transfer. An advantage of inductive power transfer is that the cleanliness requirements for the connector 11 are not strict as strict as for a connector for conductive power transfer. Compared to other inductive power transfer devices that do not comprise a planar motion stage and/or a linear actuator to align/reduce the distance between the connector 11 and contra-connector for charging a vehicle a system 10 according to the invention is more compact and provides a better defined magnetic path. Nonetheless, the preferred power transfer method for this system is by means of a conductive path between ground station 10 and vehicle. This conductive path improves the efficiency to almost 100%, is better scalable for higher charging power and is more reliable once the connector 11 is mated.

The complexity of the positioning device 10 will be lower when the connector 11 has circular symmetry (not shown), i.e. orientation independent. This type of connector reduces the required number of degrees of freedom of the automatic connection device because the connector 11 does not have to be rotated for alignment with a contra-connector for mating. The connector 11 and contra-connector may comprise conductive concentric contacts. By realizing a sliding contact when the connectors are mated, the connector 11 cleans itself and guarantees a proper conductive path. A mechanical (conical) self-centering feature can be added to the connector 11 for guiding the connector to align with the contra-connector, this may relieve the requirements on the connector 11 positioning accuracy.

Referring to Fig. 2, , the x,y-movement, like the movement in a plane parallel to floor level, is realized by means of an inner disc 13 and an outer circular disc 12 with non-coinciding axes of rotation. That is, the inner disc 13 is placed eccentric relative to the outer disc 12. The connector or socket 11 is mounted eccentric relative to the inner disc 13. The inner disc 13 and the outer disc 12 can be rotated with respect to each other and both can be rotated relative to ground. By rotating both discs 12, 13 the connection point 11 can be moved in the xy-plane. More specifically, the inner disc 13 can turn about a first axis, as indicated by the arrows in Fig. 2A, to move the connector 11 in the x,y plane. The outer disk 12 can turn about a second axis, as indicated by the arrows in Fig. 2B, to move the inner disk 13 and the connector 11 in the x,y plane. By combining movement of the inner disc 13 and the outer disc 12 (as shown in Fig. 2C) the centre of the connector 11 can be positioned at various locations. In embodiments, wherein a first distance between the first axis, and wherein the center of the interface 11 is at least as large as a second distance between the first axis and the second axis, the interface may be positioned at any location inside a circular area 27.

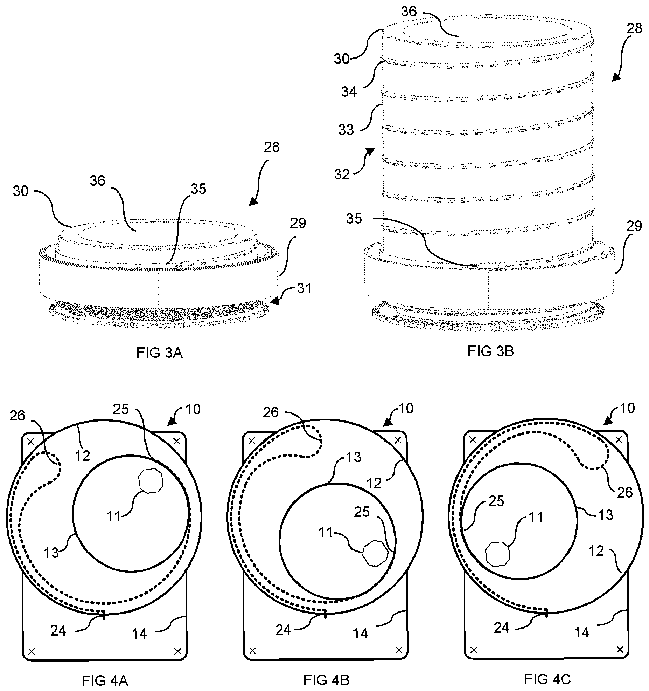

Referring to Fig. 3, the device according to the invention comprises an element 28 to move the connector 11 up towards the underside of a vehicle. A beneficial embodiment comprises a linear actuator 28 for turning a rotational movement into a linear movement, in particular a linear actuator 28 comprising a threaded member 30 having an adjustable length. The threaded member 30 may comprise a thread 34 forming continuous windings. The threaded member or part of the threaded member may be compressed in a compressed state 31 or extended in an extended state 32. Such linear actuators are very compact and allow a large stroke. The actuation system may further be configured for realizing a resilient tubular member in its extended state. A skirt 33 may be provided between the gaps of adjacent windings 34 of part of the threaded member that is in an extended state. Such skirt 32 may provide any one of the functions of strength, resilience and shielding.

The actuation system is actuated by an engaging means such as an annular member 29 that engages the threaded member 30 and which is configured to be rotated relative to the threaded member 30. This relative rotation, for instance driven by a rotary motor that drives the gear wheel at the bottom of the device, results in a compression 31 or extension 32 of the threaded member 30 and thus a linear motion. The engaging member may comprise a radially extending (e.g. inward, outward) protrusion 35 (e.g. a flange, a screw thread, an elongate extension) configured for engaging the threaded member and moving the thread.

Using such a linear actuator in an automatic connection device equipped with planar motion stages 12, 13 (e.g. discs), for displacing the interface 11 orthogonal to the plane has some major advantages. The compact folded state makes it very suitable for this system to serve a wide range of vehicles having different ground clearances. It can provide a high mating force which makes mating of the connector 11 and its connector counterpart in the vehicle easy. Furthermore, providing a resilient threaded member 30 can ensure that the mating force and thus the connection is maintained during charging, even when the height of the vehicle may change for instance due to passengers entering or leaving the car. In addition, the cylindrical column or tubular structure provided by the threaded member 28 that is realized between the device and the vehicle provides a conduit 36 that can house the charging cable carrying the power for charging the electric vehicle. Such a charging cable may for instance be placed in a helical form inside the actuator 28. Such a helical cable can be extended when the actuator is extended 32 and be folded inside the actuation system when the actuator compresses to its folded state 31.

Beneficially, the threaded member comprises windings 34 made from a strip that forms a continuous shield in the extended state 32 to keep the internals of the column clean and free of dirt and pollution such as leaves. Beneficially, the automatic connection device 10, comprises discs 12, 13 as planar motion stages and such a linear actuation system 28 with a circular shape that can easily be integrated in the disks 12, 13 and has the capability to carry a circular connector 11. Such a combination results in an automatic connection device 10 that can move a connector in directions x, y and z and that is not sensitive to pollution. Alternatively, one or more planar motion stages, such as disk 13 or both disks 12 and 13 are placed on top of the linear actuator 28, and the connector may be provided on disk 13.

Fig. 4 shows various positions of the planar motion stages 12, 13 and the cabling in the device from the base 14 to the interface 11 that may provide the electrical power required for charging the vehicle, driving the planar motion stages 12, 13 and driving the linear actuator 28. Such cabling can be realized by means of a flexible cable as illustrated by the dotted line in Fig 4. At one end this cable is attached to a first interconnection 24 to the base 14 and at the other end it is attached to a second interconnection 25 to the inner disk 13. The flexible cable is folded to form a loop 26 that rolls and unrolls at half the speed of the outer disk. This loop contains the over-length of the cable for allowing all potential rotations of the disks 12, 13. The inner disk 13 can rotate for instance between 0 and 180 degrees which is sufficient to cover all positions as long as the outer disk 12 can rotate between -180 and 180 degrees. The flexible cable is bend around the inner disk 13. When the inner disk 13 rotates clockwise the cable unrolls from this disk 13 and the loop 26 moves clockwise along the circumference of the outer disk 12.

The advantage of realizing a cable in this manner is the reduced number of dynamic bends and small bending radii of the cable; the cable only bends dynamically at the loop 26. The first interconnection 24 and the second interconnection 25 may have a fixed bending radius. This is advantageous because the dynamic bends and the bending radius have impact on the lifetime of the cable.

Beneficially, the cable can be placed in a cable chain to protect the conductors of the cable and to realize a proper guiding inside the disks 12, 13. Another option is to mount the conductors on a simple plastic guide to realize a flat cable that is formed to follow the bends as illustrated in Fig. 4. The outer disk 12 may contain a guide in the bottom and the cover for guiding the cable/cable chain towards the edge of the disk.

## Claims

1. Automatic connection device (10) for charging an electric vehicle comprising:
an electrical interface (11),
a planar motion stage (14) comprising a first moving member (13),
which first moving member is configured for moving the interface (11) within a plane (27),
a linear actuator (28) configured for moving the interface in a direction essentially orthogonal to the plane (27),
wherein the first moving member (13) is configured to rotate the interface about a first axis essentially parallel to the direction,
wherein the linear actuator (28) comprises a threaded member (30) configured for converting a rotational motion to a linear motion for moving the interface (11) in the direction
wherein the threaded member (30) has an adjustable length configured for achieving the linear motion for moving the interface (11) by adjusting the adjustable length between
- a compressed state (31) for an idle state of the automatic connection device and
- an extended state (32) for a charging state of the automatic connection device.

2. Automatic connection device according to claim 1, wherein the threaded member is a resilient threaded member, in particular an extended part of the threaded member is configured for being resilient, preferably for being resilient along the direction.

3. Automatic connection device according to claim 1 or 2, wherein the threaded member forms a hollow conduit (36) along the direction.

4. Automatic connection device according to any one of the preceding claims
wherein the threaded member comprises a helical spring, preferably a helical spring having a constant winding diameter.

5. Automatic connection device according one of the preceding claims, wherein an extended part of the threaded member comprises a skirt (33) covering a gap between adjacent windings (34) of the extended part of the threaded member, preferably the skirt is configured for being resilient.

6. Automatic connection device according to any of the preceding claims, wherein the linear actuator comprises an annular member (29) for engaging the treaded member configured for rotating relative to the threaded member and converting the rotational motion to the linear motion.

7. Automatic connection device according to any one of the preceding claims,
wherein a center of the interface is arranged at a first eccentric position from the first axis, preferably the center is a geometrical center of the interface.

8. Automatic connection device according to any one of the preceding claims,
wherein the planar motion stage comprises a second moving (12) member configured to rotate the first moving member about a second axis essentially parallel to the direction.

9. Automatic connection device according to claim 8, wherein the first axis is located at a second eccentric position from the second axis.

10. Automatic connection device according to claim 7 or 8, wherein a first distance between the first axis and the first eccentric position is essentially equal to a second distance between the first axis and the second axis.

11. Automatic connection device according to any one of claims 8 to 10, wherein the linear actuator is arranged between the first moving member and the interface, and is configured to move the interface relative to the first moving member along the direction.

12. Automatic connection device according to any of the previous claims, wherein the direction has a vertical directional component and preferably being essentially vertical.

13. Automatic connection device according to any of the previous claims, wherein the interface comprises a surface for mating a contra-interface having an alignment geometry for displacing the interface to allow mating connectors of the interface with connectors of a contra-interface, preferably the geometry is conical, tapered, convex or concave.

14. Charging station for charging an electric vehicle comprising an automated connection device according to any one of the preceding claims.

15. Use of an automatic connection device or charging station according to any one of the preceding claims.
